# EUROPÄISCHE PATENTSCHRIFT

(11) **EP 1 309 811 B1**
(45) Veröffentlichungstag und Bekanntmachung des Hinweises auf die Patenterteilung: **25.01.2006**
(21) Anmeldenummer: 01956386.5
(22) Anmeldetag: 26.07.2001
(51) Int. Cl.: F16K 31/04, F16K 37/00

(54) **STELLANTRIEB FÜR VENTILE**
ACTUATOR FOR VALVES
SERVOMOTEUR POUR SOUPAPES

(30) Priorität: 17.08.2000 DE 20014469 U
(43) Veröffentlichungstag der Anmeldung: 14.05.2003
(73) Patentinhaber: SAIA-Burgess GmbH, 01257 Dresden (DE)
(72) Erfinder: GASSER, Olivier, CH-1820 Veytaux (CH)
(74) Vertreter: Heyner, Klaus
(86) Internationale Anmeldenummer: PCT/DE2001/002840
(87) Internationale Veröffentlichungsnummer: WO 2002/014723

(56) Entgegenhaltungen:
- EP-A- 0 382 179
- EP-A- 0 933 571
- GB-A- 1 284 026
- US-A- 4 043 532
- US-A- 4 209 989

## Beschreibung

Die Erfindung betrifft einen Stellantrieb zum sicheren Schließen, Öffnen oder Umschalten von Auf-Zu-Ventilen (2/2-Ventile) und Umschaltventilen (3/2-Ventile), wie z.B. aus EP 0933571 bekannt.

Die gattunggemäß aus dem Stand der Technik bekannten Stellantriebe werden üblicherweise zum Antrieb von kleinen Auf-Zu- oder Umschaltventilen (2/2- oder 3/2-Ventile) eingesetzt. Sie sind vorrangig mit Synchronmotoren und Getriebe ausgestattet und setzen dabei meistens die ursprüngliche Rotationsbewegung des Motorantriebs in eine Translationsbewegung der Verstelleinheit um. Die Steuerung der Stellantriebe erfolgt gewöhnlich über Zeitrelais.

Als Vorteile solcher Stellantriebe seien genannt:
■ die eingesetzten Synchronmotoren sind blockierfest, sie können also gegen Anschlag gefahren werden, ohne beschädigt zu werden,
■ die Stellantriebe haben keine lastabhängige Stellkennlinie, damit kann eine eindeutige Zuordnung von Stellweg zu Stellzeit erfolgen,
■ die Spannungsversorgung des Antriebs kann direkt aus dem Wechselspannungsnetz erfolgen.

Als Nachteil sind anzuführen:
■ die Stellzeit des Antriebs muß größer sein als für den Stellweg notwendig, um Toleranzen des Stellweges im Ventil und der Stellzeit des Zeitrelais auszugleichen (Richtwert + 50%),
■ beim Fahren der Stellstange auf Anschlag kommt es zur Geräuschentwicklung, was sich besonders in Rohrleitungssystemen als störend erweist,
■ ein unnötig langes Fahren auf Anschlag hat einen erhöhten Verschleiß des Stellantriebs zur Folge.

Aufgabe der Erfindung ist es, die vorgenannten Nachteile des Standes der Technik zu beseitigen, zumindest aber zu reduzieren.

Eine erfindungsgemäße Lösung dieser Aufgabe ist im Patentanspruch 1 angegeben. Weiterbildungen der Erfindung sind in den Unteransprüchen gekennzeichnet.

Auch beim neuen Stellantrieb betätigt der Motor über ein Getriebe die Stellstange. die Stellstange weist dabei eine Verdrehsicherung auf.
Nach der Konzeption der Erfindung ist die Motor-Getriebe-Einheit in einem Gehäuse untergebracht, welches mittels seiner Aufhängung über elastische Elemente ohne gesonderte Rückstellfeder eine axiale Auslenkung entlang der gedachten Achse der Stellstange zuläßt.

Nach Ausfahren der Stellstange wird beim Erreichen des unteren Anschlags (Schließen des Ventils) das Gehäuse entgegen der Bewegungsrichtung der Stellstange 3 ausgelenkt und betätigt dabei einen oberen Endschalter.
Beim Einfahren der Stellstange wird beim Erreichen des oberen Anschlags (Ventil voll geöffnet) das Gehäuse nach unten ausgelenkt und betätigt einen unteren Endschalter.

Als Antriebsmotor kann ein Einständer-Synchronmotor eingesetzt werden. Dieser Motor hat vom Prinzip her keine definierte Drehrichtung. Für allgemeine Anwendungen wird zur Realisierung einer definierten Drehrichtung eine mechanische Rücklaufsperre verwendet. Bei der vorgeschlagenen Lösung wird der Umstand ausgenützt, daß der mechanische Anschlag der Stellstange im Ventil wie eine mechanische Rücklaufsperre im Motor wirkt. Startet der Motor beim Einschalten in der gewünschten Drehrichtung, ist die gewollte Funktion erfüllt. Startet er entgegen der gewünschten Drehrichtung, schlägt er gegen den Anschlag und wird beim Rückschwingen reversieren und in der gewünschten Drehrichtung weiterlaufen.

Die Hauptvorteile des neuen Stellantriebes können wie folgt zusammengefaßt werden:
■ der Stellantrieb benötigt nur wenige Bauteile
■ die beschriebene neuartige elastische Aufhängung der Motor-Getriebe-Einheit gewährleistet ein sicheres Schließen und Öffnen des Ventils unabhängig von den Stellwegtoleranzen,
■ die neue Bauart führt zum sofortigen Abschalten des Motors beim Erreichen eines Anschlags, damit kommt es zur Minimierung von Geräuschentwicklung und Verschleiß des Stellantriebes,
■ der Antrieb bewegt aktiv die Stellstange in beiden Richtungen ohne Gegenfeder,
■ Justierarbeiten beim Anbau des Antriebs an ein Ventil sind nicht mehr erforderlich,
■ der neue Stellantrieb beinhaltet den Einsatz eines Einständer-Synchronmotors ohne Rücklaufsperre und gewährleistet einen gezielten Betrieb in beiden Richtungen durch Nutzung der Anschläge im Ventil,
■ im neuen Stellantrieb wird ein blockierfester Motor eingesetzt, der direkt aus dem Wechselspannungsnetz gespeist werden kann.

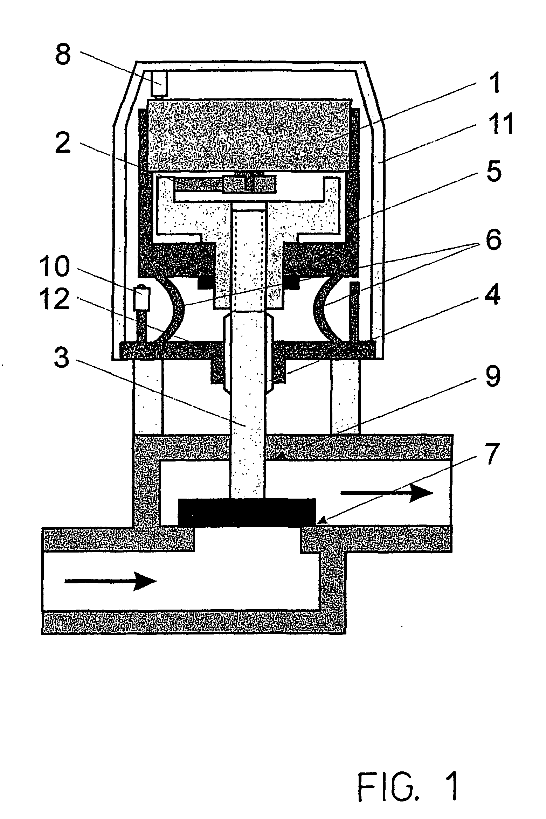

Weitere Einzelheiten, Merkmale und Vorteile der Erfindung ergeben sich aus der nachfolgenden Beschreibung eines Ausführungsbeispiels unter Bezugnahme auf die zugehörige Zeichnung. Es zeigt
Fig. 1 den Grundaufbau des neuen Ventilantriebes in einer bevorzugten Ausführungsform am Beispiel eines Auf Zu-Ventils (2/2-Ventil).

Der Motor 1 betätigt über das Getriebe 2 die Stellstange 3.
Die Stellstange 3 besitzt eine Verdrehsicherung 4.
Die Motor-Getriebe-Einheit 1, 2 ist in einem inneren Gehäuse 5 untergebracht. Dieses innere Gehäuse 5 ist mit elastischen Elementen an der Grundplatte 12 des äußeren Gehäuses 11 befestigt. Die elastischen Elemente können aus Kunststoff bestehen und Bestandteil des inneren Gehäuses (5) sein. Sie können auch durch Schraubenfedern, Blattfedern oder Gummielemente realisiert werden.
Durch die elastische Elemente kann eine axiale Auslenkung des Gehäuses 5 mit der Motor-Getriebe-Einheit 1,2 erfolgen.

Das äußere Gehäuse 11 ist feststehend.
Erreicht die ausgefahrene Stellstange 3 den unteren Anschlag 7, dann ist das "Ventil geschlossen", das Gehäuse 5 wird nach oben gegen den Endschalter 8 ausgelenkt und dabei wird der Endschalter 8 ausgelöst.
Erreicht die Stellstange 3 bei ihrem Einfahren den oberen Anschlag 9, dann ist das "Ventil voll geöffnet", das Gehäuse 5 wird nach unten ausgelenkt, es erreicht den unteren Endschalter 10 und löst ihn aus.

### Liste der Bezugszeichen

- 1: Motor
- 2: Getriebe
- 3: Stellstange
- 4: Verdrehsicherung
- 5: Gehäuse
- 6: elastische Elemente
- 7: Anschlag "Ventil geschlossen"
- 8: Endschalter
- 9: Anschlag "Ventil voll geöffnet"
- 10: Endschalter
- 11: äußeres Gehäuse
- 12: Grundplatte von 11

## Patentansprüche

1. Stellantrieb für Ventile zum sicheren Schließen, Öffnen oder Umschalten eines Ventils mit Motor (1), Getriebe (2) und Stellstange (3),
**dadurch gekennzeichnet, daß** die aus Motor (1) und Getriebe (2) gebildete Motor-Getriebe-Einheit (1, 2) elastisch aufgehängt ist, wobei die Bewegungsachse der Motor-Getriebe-Einheit (1, 2) mit der Bewegungsachse der Stellstange (3) übereinstimmt
und zwei Endschalter (8, 10) vorhanden sind, von denen der über der Motor-Getriebe-Einheit (1, 2) montierte Endschalter (8) bei Ausfahren der Stellstange (3) gegen einen Anschlag (7) durch entgegengesetzte reaktive Auslenkung der Motor-Getriebe-Einheit (1, 2) betätigt wird und der unter der Motor-Getriebe-Einheit (1, 2) angeordnete Endschalter (10) beim Einfahren der Stellstange (3) und Erreichen eines Anschlags (9) durch entsprechende reaktive Auslenkung der Motor-Getriebe-Einheit (1, 2) gegen die Bewegungsrichtung der Stellstange (3) betätigt wird.

2. Stellantrieb nach Anspruch 1,
**dadurch gekennzeichnet, daß** die Motor-Getriebe-Einheit (1, 2) in einem Gehäuse (5) untergebracht ist, das eine elastische Auslenkung in Richtung der gedachten Achse der Stellstange (3) ausführen kann.

3. Stellantrieb nach Anspruch 1 oder 2,
**dadurch gekennzeichnet, daß** zur Aufhängung der Motor-Getriebe-Einheit (1, 2) elastische Elemente (6) vorgesehen sind, die die Verbindung zwischen dem die Motor-Getriebe-Einheit (1, 2) aufnehmenden inneren Gehäuse (5) und einem äußeren feststehenden Gehäuse (11) herstellen und an diesem äußeren Gehäuse (11) die Endschalter (8, 10) befestigt sind.

4. Stellantrieb nach Anspruch 3,
**dadurch gekennzeichnet, daß** die elastischen Elemente (6) mit ihrem einen Ende an der Grundplatte (12) des äußeren Gehäuses (11) befestigt sind, wobei auf dieser Grundplatte (12) der untere Endschalter (10) angeordnet ist, und mit ihrem anderen Ende an dem darüber befindlichen auslenkbaren Gehäuse (5) befestigt sind.

5. Stellantrieb nach Anspruch 3 oder 4,
**dadurch gekennzeichnet, daß** die elastischen Elemente (6) aus Kunststoff bestehen und Bestandteil des inneren Gehäuses (5) sein können. Sie können auch durch Schraubenfedern, Blattfedern oder Gummielemente realisiert werden.

6. Stellantrieb nach Anspruch 3 oder 4,
**dadurch gekennzeichnet, daß** die elastischen Elemente (6) durch Schraubenfedern, Blattfedern oder Gummielemente realisiert werden.

7. Stellantrieb nach einem der Ansprüche 1 bis 6,
**dadurch gekennzeichnet, daß** als Antriebsmotor ein Einständer-Synchronmotor ohne interne Rücklaufsperre für den gezielten Betrieb in beiden Drehrichtungen eingesetzt wird, wobei die Ventilanschläge (7, 9) zur Drehrichtungsumkehr genutzt werden.

## Claims

1. Actuator for valves for reliable closing, opening or switching of a valve provided with a motor (1), gear (2) and actuating pin (3), **characterized in that** the motor/gear unit (1, 2) established of motor (1) and gear (2) is flexibly suspended, whereby the motion axis of the motor/gear unit (1, 2) coincides with the axis of motion of the actuating pin (3) and two limit switches (8, 10) are provided of which the limit switch (8) mounted above the motor/gear unit (1, 2) is actuated when the actuating pin (3) moves outwards against a stop (7) by opposite reactive displacement of the motor/gear unit (1, 2) and the limit switch (10) placed below the motor/gear unit (1, 2) is actuated when the actuating pin (3) moves inwards reaching a stop (9) by corresponding reactive displacement of the motor/gear unit (1, 2) against the direction of motion of the actuating pin (3).

2. Actuator to claim 1 **characterized in that** the motor/gear unit (1, 2) is placed in a housing (5) which can perform an elastic displacement in direction of the imaginary axis of the actuating pin (3).

3. Actuator to claim 1 or 2 **characterized in that** for the suspension of the motor/gear unit (1, 2) elastic elements (6) are provided which produce the connection between the inner housing (5) accommodating the motor/gear unit (1, 2) and a fixed outer housing (11), whereby the limit switches (8, 10) are attached to the outer housing (11).

4. Actuator to claim 3 **characterized in that** the elastic elements (6) are by their one end attached to the baseplate (12) of the outer housing (11), whereby the bottom limit switch (8) is arranged on the baseplate (12), and by their other end attached to the displaceable housing (5) above it.

5. Actuator to claim 3 or 4 **characterized in that** the elastic elements (6) are made of plastics and can be part of the inner housing (5), whereby they can also be realized from coil springs, leaf springs, or rubber elements.

6. Actuator to claim 3 or 4 **characterized in that** the elastic elements (6) are made of coil springs, leaf springs, or rubber elements.

7. Actuator to one of the claims 1 to 6 **characterized in that** as drive motor a single-stator synchronous motor without internal hold-back is used for specific operation in both directions of rotation, whereby the valve stops (7, 9) are used for the reversal of the direction of rotation.

## Revendications

1. Servomoteur pour soupapes, affecté à la fermeture, à l'ouverture ou à la commutation sûre d'une soupape, comprenant un moteur (1), une transmission (2) et une tige de réglage (3),
**caractérisé par le fait que** l'ensemble unitaire (1, 2) moteur-transmission constitué du moteur (1) et de la transmission (2) est suspendu élastiquement, l'axe de mouvement dudit ensemble unitaire (1, 2) moteur-transmission coïncidant avec l'axe de mouvement de la tige de réglage (3) ;
et par la présence de deux interrupteurs (8, 10) de fin de course parmi lesquels l'interrupteur (8) de fin de course, monté au-dessus de l'ensemble unitaire (1, 2) moteur-transmission, est actionné lors d'un déploiement de la tige de réglage (3) venant rencontrer une butée (7), par excursion réactive opposée de l'ensemble unitaire (1, 2) moteur-transmission, et l'interrupteur (10) de fin de course, disposé au-dessous de l'ensemble unitaire (1, 2) moteur-transmission, est actionné lors de la rétraction de la tige de réglage (3) et lorsqu'une butée (9) est atteinte, par excursion réactive correspondante de l'ensemble unitaire (1, 2) moteur-transmission, en opposition à la direction de mouvement de ladite tige de réglage (3).

2. Servomoteur selon la revendication 1,
**caractérisé par le fait que** l'ensemble unitaire (1, 2) moteur-transmission est logé dans un carter (5) pouvant accomplir une excursion élastique dans la direction de l'axe imaginaire de la tige de réglage (3).

3. Servomoteur selon la revendication 1 ou 2,
**caractérisé par le fait que** des éléments élastiques (6), prévus pour la suspension de l'ensemble unitaire (1, 2) moteur-transmission, établissent la liaison entre le carter intérieur (5) recevant ledit ensemble unitaire (1, 2) moteur-transmission et un carter extérieur fixe (11), et les interrupteurs (8, 10) de fin de course sont fixés à ce carter extérieur (11).

4. Servomoteur selon la revendication 3,
**caractérisé par le fait que** les éléments élastiques (6) sont fixés, par l'une de leurs extrémités, à la plaque de base (12) du carter extérieur (11), l'interrupteur inférieur (10) de fin de course étant disposé sur cette plaque de base (12) ; et sont fixés, par leur autre extrémité, au carter sus-jacent (5) pouvant effectuer une excursion.

5. Servomoteur selon la revendication 3 ou 4,
**caractérisé par le fait que** les éléments élastiques (6) consistent en une matière plastique et peuvent faire partie intégrante du carter intérieur (5). Ils peuvent également être concrétisés par des ressorts hélicoïdaux, des lames de ressort ou des éléments en caoutchouc.

6. Servomoteur selon la revendication 3 ou 4,
**caractérisé par le fait que** les éléments élastiques (6) sont matérialisés par des ressorts hélicoïdaux, des lames de ressort ou des éléments en caoutchouc.

7. Servomoteur selon l'une des revendications 1 à 6,
**caractérisé par** l'utilisation, en tant que moteur d'entraînement, d'un moteur synchrone à montant unique, dépourvu de verrou interne de marche arrière pour le fonctionnement recherché dans les deux sens de rotation, les butées (7, 9) de la soupape étant utilisées pour l'inversion du sens de rotation.
